# EUROPÄISCHE PATENTSCHRIFT

(11) **EP 1 053 910 B1**
(45) Veröffentlichungstag und Bekanntmachung des Hinweises auf die Patenterteilung: **04.04.2007**
(21) Anmeldenummer: 00110586.5
(22) Anmeldetag: 18.05.2000
(51) Int. Cl.: B60Q 3/02

(54) **Innenraumbeleuchtung von Fahrzeugen, vorzugsweise von Kraftfahrzeugen**
Interior lighting for vehicle
Eclairage intérieur pour véhicule

(30) Priorität: 21.05.1999 DE 29908994 U
(43) Veröffentlichungstag der Anmeldung: 22.11.2000
(73) Patentinhaber: Schefenacker Vision Systems Germany GmbH, 71409 Schwaikheim (DE)
(72) Erfinder: Zimmermann, Werner, 73113 Ottenbach (DE); Wagner, Dag, Dr., 54439 Palzern (DE)
(74) Vertreter: Kohl, Karl-Heinz

(56) Entgegenhaltungen:
- EP-A- 0 334 799
- GB-A- 2 333 829
- US-A- 5 013 967
- PATENT ABSTRACTS OF JAPAN vol. 008, no. 096 (M-294), 4. Mai 1984 (1984-05-04) & JP 59 011934 A (NISSAN JIDOSHA KK), 21. Januar 1984 (1984-01-21)

## Beschreibung

Die Erfindung betrifft eine Innenraumbeleuchtung von Fahrzeugen, vorzugsweise von Kraftfahrzeugen, nach dem Oberbegriff des Anspruches 1.

Bei bekannten Innenraumbeleuchtungen sind Glühlampen vorgesehen, die hinter einer lichtdurchlässigen Scheibe aus Glas oder Kunststoff liegt. Für den Einbau solcher Leuchtfelder ist ein erheblicher Aufwand notwendig, da im Fahrzeug entsprechende Einbauöffnungen zum Einrasten, Einklipsen oder Einschrauben von Lichtgehäusen notwendig sind.

Bei einer bekannten und gattungsgemäßen Innenraumbeleuchtung (US-A-5 013 967) ist ein Flächenstrahler vorgesehen, an den ein Stecker angeschlossen wird. Der Flächenstrahler zusammen mit dem Stecker bildet eine Elektrolumineszens-Lampe, die nach Art einer Glühlampe in eine Steckerbuchse im Fahrzeug gesteckt wird. Damit bei mehrmaligem Einstecken bzw. Herausziehen der EL-Lampe der Flächenstrahler nicht beschädigt wird, wird er so ausgebildet, daß er eine hohe mechanische Festigkeit aufweist.

Es ist weiter eine Innenraumbeleuchtung bekannt (EP-A-334 799), bei der eine EL-Folie in ein Gehäuse eingesetzt wird. Es wird von außen auf eine Innenraumverkleidung des Fahrzeuges aufgesetzt. Das Gehäuse ist an der Unterseite mit Steckzapfen versehen, die die Innenraumverkleidung durchstoßen und die in entsprechende Aufnahmeöffnungen der Fahrzeugkarosserie eingreifen.

Der Erfindung liegt die Aufgabe zugrunde, die gattungsgemäße Innenraumbeleuchtung so auszubilden, daß sie einfach und kostengünstig im Fahrzeuginnenraum installiert werden kann.

Diese Aufgabe wird ausgehend von der gattungsgemäßen Innenraumbeleuchtung erfindungsgemäß mit den Merkmalen des Anspruches 1 gelöst.

Bei der erfindungsgemäßen Innenraumbeleuchtung weist das Leuchtfeld wenigstens einen folienförmigen Licht abstrahlenden Flächenstrahler auf. Er läßt sich aufgrund seiner folienartigen Gestaltung einfach und kostengünstig an jeder gewünschten Stelle innerhalb des Fahrzeuginnenraumes anbringen. Aufwendige Montageöffnungen und -vertiefungen am Fahrzeug sind nicht erforderlich.

Solche Flächenstrahler können beispielsweise unmittelbar aufgeklebt werden, so daß der Montageaufwand äußerst gering ist.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung Leuchtfelder einer erfindungsgemäßen Innenraumbeleuchtung in einem Kraftfahrzeug,
- Fig. 2: in schematischer Darstellung eine Seitenansicht der Leuchtfelder der erfindungsgemäßen Innenraumbeleuchtung gemäß Fig. 1,
- Fig. 3: ein Blockschaltbild einer Helligkeitsregulierung der erfindungsgemäßen Innenraumbeleuchtung,
- Fig. 4: ein Schaltungsbeispiel eines Konverters der Helligkeitsregulierung gemäß Fig. 3,
- Fig. 5: ein weiteres Ausführungsbeispiel einer Schaltung eines Konverters der Helligkeitsregulierung gemäß Fig. 3,
- Fig. 6: in schematischer Darstellung einen Schnitt durch eine Elektrolumineszenzfolie der erfindungsgemäßen Innenraumbeleuchtung,
- Fig. 7: in schematischer Darstellung eine zweite Ausführungsform einer Elektrolumineszenzfolie der erfindungsgemäßen Innenraumbeleuchtung,
- Fig. 8: in einer Darstellung entsprechend Fig. 7 eine weitere Ausführungsform einer Elektrolumineszenzfolie der erfindungsgemäßen Innenraumbeleuchtung,
- Fig. 9: in schematischer Darstellung eine Schaltung für die erfindungsgemäße Innenraumbeleuchtung gemäß den Fig. 7 und 8.

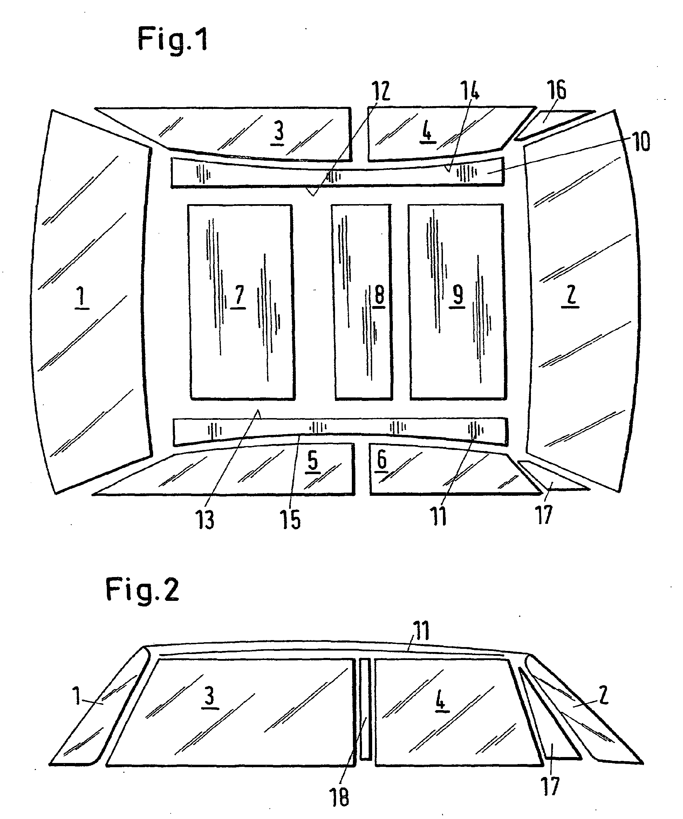

Die Fig. 1 und 2 zeigen eine Innenraumbeleuchtung eines Kraftfahrzeuges, das eine Windschutzscheibe 1, eine Heckscheibe 2 und Seitenfenster 3 bis 6 aufweist. Zwischen der Windschutzscheibe 1 und der Heckscheibe 2 befinden sich drei mit Abstand voneinander liegende Leuchtfelder 7 bis 9, die rechteckigen Umriß haben. Im Ausführungsbeispiel sind die der Windschutzscheibe 1 und der Heckscheibe 2 benachbarten Leuchtfelder 7, 9 gleich groß, während das zwischen ihnen befindliche Leuchtfeld 8 kleinere Fläche hat. Quer zur Längsrichtung des Fahrzeuges gesehen sind die Leuchtfelder 7 bis 9 gleich lang.

Im Bereich zwischen den Seitenfenstern 3, 4 bzw. 5, 6 und den Leuchtfeldern 7 bis 9 befindet sich jeweils ein Leuchtfeld 10, 11, das mit Abstand zu den Leuchtfeldern 7 bis 9 und den Seitenfenstern sowie der Windschutzscheibe 1 und der Heckscheibe 2 vorgesehen ist. Die beiden Leuchtfelder 10, 11 sind langgestreckt ausgebildet und haben eine den mittleren Leuchtfeldern 7 bis 9 zugewandte ebene Längsseite 12 bzw. 13, die parallel zu den benachbarten schmalen Seiten der Leuchtfelder 7 bis 9 verläuft. Der gegenüberliegende Längsrand 14, 15 der Leuchtfelder 11, 12 ist an den Verlauf der benachbarten Ränder der Seitenfenster 3 bis 6 angepaßt. Vorteilhaft verlaufen die Längsränder 14, 15 parallel zu den benachbarten Rändern der Seitenfenster 3 bis 6. Das der Heckscheibe 2 zugewandte Ende der Leuchtfelder 11, 12 liegt auf gleicher Höhe wie der der Heckscheibe 2 zugewandte Längsrand des Leuchtenfeldes 9. In Richtung auf die Windschutzscheibe 1 überragen die schmalen Leuchtfelder 10, 11 das Leuchtfeld 7.

Im Bereich zwischen der Heckscheibe 2 und den benachbarten Seitenfenstern 4, 6 befindet sich vorteilhaft jeweils ein weiteres Leuchtfeld 16 und 17. Beide Leuchtfelder 16, 17 sind vorteilhaft gleich ausgebildet und haben Dreieckform (Fig. 2).

Wie Fig. 2 zeigt, können auch zwischen benachbarten Seitenfenstern 3 und 4 bzw. 5 und 6 schmale, über die Höhe der Seitenfenster sich erstreckende Leuchtfelder 18 vorgesehen sein.

Die Fig. 1 und 2 zeigen lediglich eine beispielhafte Anordnung und Verteilung der verschiedenen Leuchtfelder. Selbstverständlich können die Leuchtfelder auch eine völlig andere Gestaltung haben. Ebenso ist es selbstverständlich möglich, die Verteilung der Leuchtfelder im Innenraum des Fahrzeuges in anderer Weise zu gestalten.

Es können alle Pfosten, aber auch die Innenseiten der Türen, das Armaturenbrett, die Mittelkonsole oder sonstige Bereiche im Innenraum des Fahrzeuges mit Leuchtfeldern versehen sein.

Die Leuchtfelder 7 bis 12, 16 bis 18 werden über ihre gesamte Fläche beleuchtet, wenn eine entsprechende Stromzufuhr erfolgt. Aufgrund der flächenhaften Beleuchtung ergibt sich im Fahrzeuginnenraum eine angenehme Beleuchtung. Die Leuchtfelder können in gleichem Farbton leuchten, aber auch in unterschiedlichen Farbtönen. Die Leuchtfelder 7 bis 9 sind im Bereich des Fahrzeugdaches vorgesehen. Anstelle der drei einzelnen Leuchtfelder 7 bis 9 könnte auch nur ein einziges Leuchtfeld vorgesehen sein, das sich über die Fläche des Daches des Fahrzeuges erstreckt. Dann wird der gesamte Fahrgastinnenraum gleichmäßig ausgeleuchtet. Es können aber auch beispielsweise nur die Vordersitze oder auch nur die Rücksitze des Fahrzeuges beleuchtet werden. In diesem Fall sind die entsprechenden Leuchtfelder nur im vorderen oder im hinteren Teil des Daches des Fahrzeuginnenraumes vorgesehen. Die zwischen der Heckscheibe 2 und den benachbarten Seitenfenstern 4, 6 vorgesehenen Leuchtfelder 16, 17 tragen zu einer optimalen Beleuchtung im Bereich der Rücksitze des Fahrzeuges bei, da sie zusätzlich zum Leuchtfeld im Dachbereich auch seitlich Licht auf den Rücksitzbereich abstrahlen.

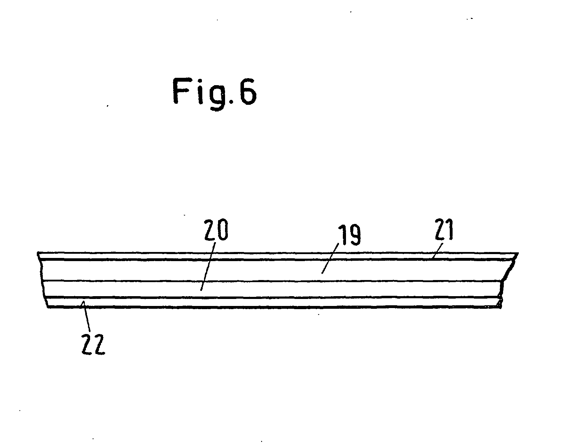

Die Leuchtfelder 7 bis 11, 16 bis 18 haben eine Elektrolumineszenzfolie 19 (Fig. 6), auf der sich auf ihrer dem Kraftfahrzeuginnenraum zugewandten Seite eine Schutzschicht 20 befindet. Sie ist ebenfalls folienartig ausgebildet und dient als mechanischer und elektrischer Schutz für die Elektrolumineszenzfolie 19. Auf der anderen Seite dieser Folie 19 befindet sich vorteilhaft ebenfalls eine Schutzschicht 21, die ebenfalls folienartig ausgebildet ist und als mechanischer und elektrischer Schutz dient. Die Elektrolumineszenzfolie besteht aus einer Frontelektrode und einer Rückenelektrode, die durch eine Isolation voneinander getrennt sind. Die Frontelektrode, die der Schutzschicht 20 zugewandt ist, ist transparent ausgebildet, während die Rückenelektrode, die der Schutzschicht 21 zugewandt ist, aus nichttransparentem Material besteht. Die Schutzschichten 20, 21 können aus Kunststoffolie oder auch aus Glas gebildet sein. Insbesondere in die dem Fahrzeuginnenraum zugewandte Schutzschicht 20 können Bedruckungen oder Abdeckungen eingefügt sein. Zwischen den beiden Elektroden der Elektrolumineszenzfolie 19 ist ein Leuchtstoff eingebettet, der bei Anlegung einer Spannung an die beiden Elektroden Licht aussendet. Da die Rückenelektrode nicht transparent ist, fällt das Licht über die Schutzschicht 20 in den Fahrzeuginnenraum. Vorteilhaft befindet sich das Leuchtfeld unterhalb einer Verkleidung 22 des Fahrzeuginnenraumes. Sie ist lichtdurchlässig ausgebildet, so daß das vom Leuchtfeld ausgehende Licht durch die Verkleidung 22 in den Fahrzeuginnenraum gelangt. Die Verkleidung 22, die aus textilem Material, aber auch aus Kunststoff bestehen kann, deckt die Leuchtfelder 7 bis 11, 16 bis 18 vorteilhaft so ab, daß sie in nicht eingeschaltetem Zustand nicht sichtbar sind.

Da die Elektroden der Elektrolumineszenzfolie 19 sich über die Fläche des Leuchtenfeldes erstrecken, kann das folienartige Ausgangsmaterial für die Leuchtfelder 7 bis 11, 16 bis 18 in jede beliebige Umrißform geschnitten werden.

Die Schutzschicht 21 kann auf ihrer Rückseite selbstklebend ausgebildet sein, so daß das jeweilige Leuchtfeld in einfacher Weise im Fahrzeug angeklebt werden kann. Die dem Fahrzeuginnenraum zugewandte Schutzschicht 20 kann jede gewünschte Oberflächenbeschaffenheit haben, beispielsweise mattiert oder in einem gewünschten Farbton gehalten werden. Die verschiedenen Schichten der folienartigen Leuchtfelder werden laminiert. Die Dicke eines Leuchtfeldes liegt in der Größenordnung von 2 x 0,075 mm bis etwa 2 x 0,25 mm. Aufgrund dieser geringen Dicke tragen die Leuchtfelder 7 bis 11, 16 bis 18 nahezu nicht auf, so daß sie problemlos an jeder Stelle innerhalb des Fahrzeuginnenraumes vorgesehen werden können. Je nach dem Leuchtstoff, der sich zwischen den beiden Elektroden der Elektrolumineszenzfolie 19 befindet, können unterschiedliche Farben für die Leuchtfelder vorgesehen sein.

Der Elektrolumineszenzeffekt der Folie 19 wird durch ein Wechselspannungsfeld erzeugt. Durch Verändern der Spannung läßt sich die Helligkeit der Leuchtfelder 7 bis 11, 16 bis 18 regeln. Durch Verändern der Frequenz kann auch der Farbtemperaturpunkt verschoben werden.

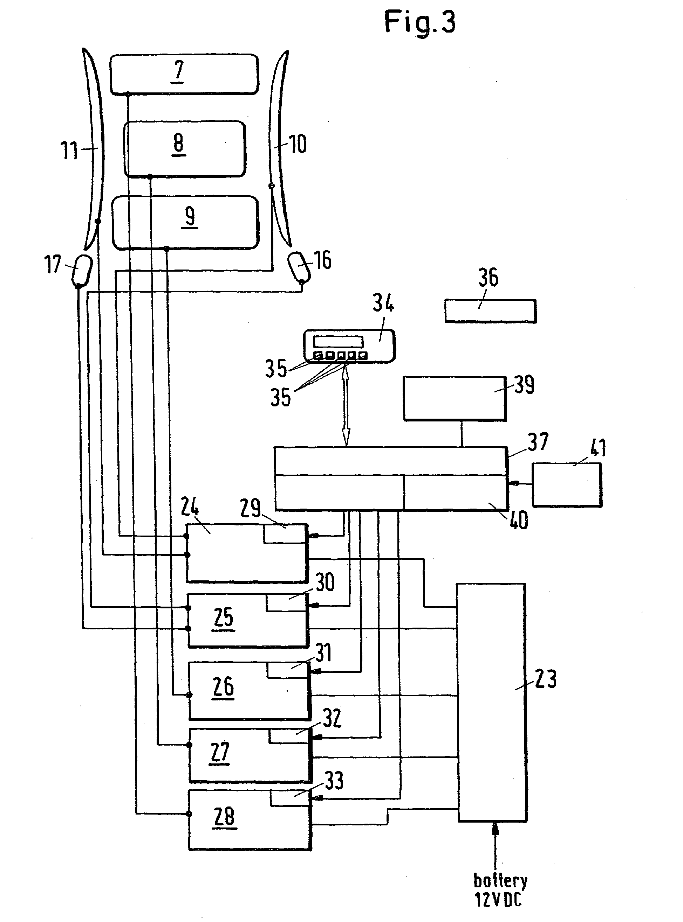

Fig. 3 zeigt die Spannungsversorgung der Leuchtfelder. Der Fahrzeugbatterie, die üblicherweise mit 12 V Gleichstrom arbeitet, ist ein DC/AC-Wandler 23 nachgeschaltet, der den von der Batterie kommenden Gleichstrom in Wechselstrom wandelt. Den Leuchtfeldern 7 bis 11, 16, 17 sind Konverter zugeordnet, die an den DC/AC-Wandler 23 angeschlossen sind. Die Konverter 24 bis 28 arbeiten beispielsweise jeweils mit einer Spannung von 120 V und einer Frequenz von 400 Hz. Die Konverter 24 bis 28 sind vorteilhaft mit Dimmern 29 bis 33 versehen, so daß die Helligkeit der Leuchtfelder einfach reguliert werden kann.

Mit einem Eingabegerät 34, das vorteilhaft im Zugriffsbereich des Fahrers angeordnet ist, lassen sich über entsprechende Tasten 35 die jeweiligen Leuchtfelder 7 bis 11, 16, 17 ein- bzw. ausschalten. Die Tasten 35 können Folientasten, aber auch herkömmliche Drucktasten sein. Das Eingabegerät 34 kann vorteilhaft mit einer Rechnereinheit 36 programmiert werden. Die vom Eingabegerät 34 ausgesandten Signale werden einem Rechner 37 zugeführt, der im dargestellten Ausführungsbeispiel fünf Analogausgänge 38 hat, über welche die Konverter 24 bis 28 mit einer Steuerspannung beaufschlagt werden. Sie kann beispielhaft im Bereich zwischen 0 und 10 V liegen. Der Steuerstrom kann beispielsweise bei 10 mA liegen.

Der Rechner 37 ist über den DC/AC-Wandler 23 oder über einen weiteren DC/AC-Wandler 39 an die Fahrzeugbatterie angeschlossen.

Der Rechner 37 ist ferner mit einem Digitaleingang 40 versehen, der mit beispielsweise 5 V arbeitet. Anstelle des Digitaleinganges kann auch ein Analogeingang vorgesehen sein. Ebenso ist es möglich, anstelle des Digitaleinganges wenigstens einen Sensor vorzusehen, über den der Rechner 37 beispielsweise über einen Sender eines Türöffners 41 ferngesteuert betätigt werden kann. Ein solcher Sensor kann aber auch so ausgebildet sein, daß er auf die Umgebungshelligkeit anspricht. Sobald die Umgebungshelligkeit einen vorgegebenen Wert unterschreitet, wird selbsttätig die Innenbeleuchtung des Fahrzeuges eingeschaltet. Dieser Sensor kann außerdem so ausgelegt sein, daß er bei Überschreiten dieses voreingestellten Helligkeitswertes die Innenbeleuchtung automatisch ausschaltet.

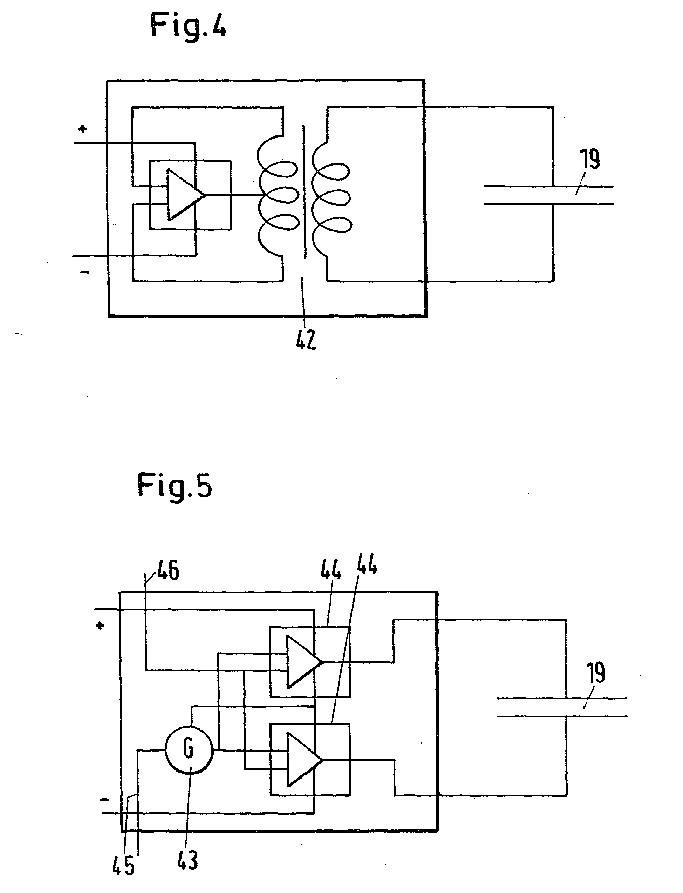

Als Konverter 24 bis 28 können passive oder aktive Konverter eingesetzt werden. Fig. 4 zeigt ein Beispiel für einen passiven Konverter. Er hat einen Schwingkreis 42, mit dem eine Versorgungsgleichspannung auf der Primärseite in eine sinusförmige Wechselspannung auf der Sekundärseite umgewandelt wird. Die Elektrolumineszenzfolie 19 dient als Kapazität, die den Schwingkreis 42 auf der Sekundärseite abstimmt. Die Spannung und Frequenz ändern sich in Abhängigkeit von der Größe des jeweiligen Leuchtfeldes 7 bis 11, 16 bis 18. Solche passiven Konverter erzeugen mit Hilfe des Schwingkreises 42 eine Frequenz mit einer ausreichenden Spannung. Solche Konverter sind für einen großen Versorgungsspannungsbereich geeignet.

Als Konverter 24 bis 28 können auch aktive Konverter eingesetzt werden (Fig. 5). Dieser aktive Konverter erzeugt die Frequenz und die Spannung mit Hilfe eines Generators 43, wobei Spannung und Frequenz über den gesamten Versorgungsspannungsbereich stabil bleiben. Bei diesen aktiven Konvertern wird ein pulsweitenmoduliertes Signal in eine digitale Sinusanregung konvertiert und nach einer Digital/Analogwandlung an den Eingang einer Leistungsendstufe gelegt. Ihr ist ein Transformator zur Hochtransformation der Spannung nachgeschaltet, welche die Elektrolumineszenzfolie 19 treibt. An der Sekundärseite wird die Spannung zu Regelungszwecken abgegriffen, gleichgerichtet und einem Regelkreis 44 als Ist-Wert zugeführt. Die Dimmung (Fig. 3) wird durch die Pulsweitenmodulation vorgenommen. Das externe Steuersignal 45, das zwischen 0 bis 10 V bei Gleichstrom liegen kann, wird mit dem Modulationsgrad (PulsPausen-Verhältnis) des Pulsweitenmodulationssignal multipliziert.

Das Ergebnis wird als Soll-Wert digitalisiert und der Sinuserzeugung zugeführt. Der Leistungsendstufe wird auch ein Regelsignal 46 zugeführt.

Die Leuchtfelder 7 bis 11, 16 bis 18 können so ausgebildet sein, daß das von ihnen ausgesendete Licht nicht der Leuchtfarbe im ausgeschalteten Zustand entspricht. So kann das Leuchtfeld beispielsweise rot abstrahlen, weist jedoch in ausgeschaltetem Zustand beispielsweise eine graue Farbe auf. Eine solche Ausbildung der Leuchtfelder hat den Vorteil, daß sie bei ausgeschaltetem Zustand im Fahrzeuginnenraum nicht erkennbar sind.

Die Leuchtfelder können aber auch so ausgebildet sein, daß die Lumineszenzfolie 19 mit Tageslichtpigmenten angereichert ist. Dann haben die Leuchtfelder im eingeschalteten und im ausgeschalteten Zustand den gleichen Farbton. Solche Leuchtfelder können bewußt farbig gestaltet und zur Innenraumgestaltung des Fahrzeuges herangezogen werden. Im Fahrzeuginnenraum können beide Arten von Leuchtfeldern verwendet werden, je nach gewünschtem Einsatzzweck.

Da die folienförmigen Leuchtfelder nur eine sehr geringe Dicke haben, können sie beispielsweise auch an der Unterseite von Schiebedächern der Fahrzeuge befestigt werden. So kann beispielsweise das Leuchtfeld 7 gemäß Fig. 1 an der Unterseite des Schiebedaches befestigt sein. Ist das Schiebedach geschlossen, dann kann dieser Bereich des Daches des Fahrzeuginnenraumes für Beleuchtungszwecke herangezogen werden.

Anstelle der beschriebenen elektrolumineszendierenden Folie kann als Flächenstrahler auch eine lichtemittierende Polymerfolie eingesetzt werden. Für sie ist nur eine geringe Betriebsspannung notwendig, die in der Größenordnung von etwa 2 Volt liegt.

Bei den beschriebenen Ausführungsbeispielen haben die verschiedenen Leuchtfelder einen einheitlichen Farbton. Je nach dem Leuchtstoff, der zwischen den beiden Elektroden der Elektrolumineszenzfolie 19 angeordnet ist, können unterschiedliche Farbtöne erreicht werden. Durch Verändern der Frequenz kann auch der Farbtemperaturpunkt verschoben werden, so daß eine geringe Änderung der Farbtemperatur möglich ist.

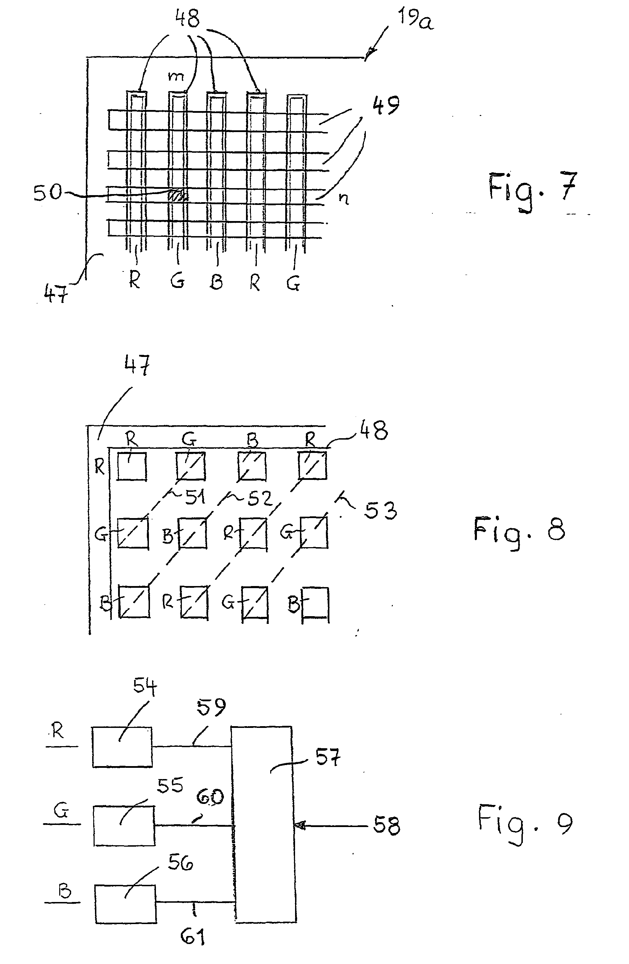

Fig. 7 zeigt eine Möglichkeit, den Farbton der Leuchtfelder im Kraftfahrzeug beliebig zu verändern, je nach Wunsch des Fahrzeuginsassen. Hierfür wird eine Elektrolumineszenzfolie 19a verwendet, die einen folienartigen Träger 47 für Frontelektroden 48 und Rückelektroden 49 sowie für verschiedenfarbige Leuchtstoffe R, G, B aufweist. Die aus Phosphorfarben bestehenden Leuchtstoffe werden abwechselnd die auf dem Folienträger 47 befindlichen Frontelektroden 48 gedruckt. Die Front- und die Rückelektroden 48, 49 sind einander rechtwinklig kreuzend aufgedruckt. Je nach Ansteuerung der entsprechenden Front- und Rückelektrodenreihe leuchtet ein entsprechender Farbpunkt 50 auf. In Fig. 7 ist beispielhaft dargestellt, daß die Frontelektrode 48m und die Rückelektrode 49n angesteuert sind. Dadurch leuchtet der Farbpunkt 50 auf. Je nach Wahl der anzusteuernden Elektroden 48, 49 können unterschiedlichste Farbpunkte zum Leuchten gebracht werden. Da die Farbpunkte in den unterschiedlichen Farben R (rot), G (grün) und B (blau) ausgebildet sind, kann auf diese Weise der Farbton beim Einschalten des jeweiligen Leuchtfeldes gewählt werden.

Wird für die Leuchtfelder eine Elektrolumineszenzfolie eingesetzt, dann sind die Elektroden 48, 49 durch eine Isolation voneinander getrennt. Wird hingegen für die Leuchtfelder eine lichtemittierende Polymerfolie verwendet, kann auf eine solche Isolation zwischen den Elektroden verzichtet werden.

Fig. 8 zeigt beispielhaft, daß die Leuchtstoffe R, G, B nicht mehr streifenförmig, sondern in Form von diskreten Leuchtstoffpunkten auf die Frontelektrode 48 aufgedruckt sind. Die Frontelektrode 48 ist im Unterschied zum Ausführungsbeispiel nach Fig. 7 nicht mehr streifenförmig, sondern flächenhaft ausgebildet und auf dem Folienträger 48 angeordnet. Auf dieser Frontelektrode 48 sind die Farbpunkte R, G, B aufgedruckt. Auf den Farbpunkten R, G, B befindet sich jeweils die Rückelektrode 49, die vorteilhaft deckungsgleich zu den Farbpunkten liegt. Die Farbpunkte haben unterschiedlich eingefärbte Phosphorfarben. Zwischen den Farbpunkten R, G, B und den Rükkelektroden 49 befindet sich ein Isolator, der vorteilhaft flächenförmig ausgebildet ist und sich über sämtliche Farbpunkte erstreckt. Der Isolator kann aber ebenfalls im Muster der Farbpunkte aufgebracht sein. Wie Fig. 8 schematisch zeigt, sind die gleichfarbigen Farbpunkte R, G, B jeweils durch eine gemeinsame elektrische Zuleitung 51, 52, 53 miteinander verbunden.

Fig. 9 zeigt beispielhaft, wie der Farbton der Leuchtfelder vorteilhaft kontinuierlich von rot nach blau über weiß eingestellt werden kann. Hierzu werden drei Konverter 54 bis 56, die den Farbfeldern R, G und B zugeordnet sind, angesteuert. Die Konverter 54 bis 56 sind an einen Mischer 57 angeschlossen, der entsprechend dem gewünschten Farbton des jeweiligen Leuchtfeldes pulsweitenmodulierte Signale 59 bis 61 an die Konverter 54 bis 56 sendet. Die Konverter 54 bis 56 können entsprechend der vorigen Ausführungsform ausgebildet und aktive oder passive Konverter sein. Über die Konverter 54 bis 56 werden die entsprechenden Elektroden 48, 49 angesteuert, so daß die gewünschten Farbfelder R, G, B leuchten. Am Eingang des Mischers 57 liegt ein Eingangssignal 58 an, das der Insasse des Kraftfahrzeuges auslöst. So kann beispielsweise am Armaturenbrett des Kraftfahrzeuges ein Drehschalter vorgesehen sein, mit dem durch Drehen der gewünschte Farbton des erleuchteten Leuchtfeldes eingestellt werden kann. Je nach Stellung dieses Schalters werden über den Mischer 57 die Konverter 54 bis 56 in entsprechendem Verhältnis angesteuert, so daß beispielsweise die roten Farbfelder R 40 %, die grünen Farbfelder G 30 % und die blauen Farbfelder B 30 % des Gesamtstromes erhalten. Auf diese Weise kann der Farbton mittels Durchstimmen von rot nach blau über weiß stufenlos eingestellt werden.

Im übrigen ist die Schaltung gemäß Fig. 9 gleich ausgebildet wie die anhand der Fig. 1 bis 6 beschriebene Schaltung.

Der Insasse des Kraftfahrzeuges kann bei Verwendung der Elektrolumineszenzfolien 19a jeden gewünschten Farbton zwischen rot und blau einstellen. Es ist möglich, nur einzelne der Leuchtfelder im Fahrzeug so auszubilden, daß sie in unterschiedlichen Farbtönen leuchten können.

## Patentansprüche

1. Innenraumbeleuchtung von Fahrzeugen, vorzugsweise von Kraftfahrzeugen, mit wenigstens einem Leuchtfeld (7 bis 11, 16 bis 18), das an eine Spannungsversorgung des Fahrzeuges angeschlossen und durch wenigstens einen folienartigen, Licht abstrahlenden Flächenstrahler gebildet ist, wobei im Leitungsweg von der Spannungsversorgung zum Leuchtfeld (7 bis 11, 16 bis 18) mindestens ein DC/AC-Wandler (23) liegt,
**dadurch gekennzeichnet, daß** das Leuchtfeld (7 bis 11, 16 bis 18) unterhalb einer Innenverkleidung (22) des Fahrzeuginnenraumes liegt, und daß dem DC/AC-Wandler (23) mindestens ein Konverter (24 bis 28, 54 bis 56) nachgeschaltet ist.

2. Beleuchtung nach Anspruch 1,
**dadurch gekennzeichnet, daß** die Innenverkleidung (22) aus lichtdurchlässigem textilem Material besteht.

3. Beleuchtung nach Anspruch 1,
**dadurch gekennzeichnet, daß** die Innenverkleidung (22) aus lichtdurchlässigem Schaumstoff besteht.

4. Beleuchtung nach einem der Ansprüche 1 bis 3,
**dadurch gekennzeichnet, daß** das Leuchtfeld (7 bis 11, 16 bis 18) in seiner Helligkeit einstellbar ist, vorzugsweise durch Veränderung der Versorgungsspannung des Leuchtfeldes (7 bis 11, 16 bis 18).

5. Beleuchtung nach einem der Ansprüche 1 bis 4,
**dadurch gekennzeichnet, daß** der Farbton des Leuchtfeldes (7 bis 11, 16 bis 18) veränderbar ist, vorzugsweise durch Veränderung der Spannungsfrequenz.

6. Beleuchtung, insbesondere nach einem der Ansprüche 1 bis 5,
**dadurch gekennzeichnet, daß** im Leuchtfeld (7 bis 11, 16 bis 18) verschiedenfarbige Farbpunkte (R, G, B, 50) ansteuerbar sind.

7. Beleuchtung nach Anspruch 6,
**dadurch gekennzeichnet, daß** das Leuchtfeld (7 bis 11, 16 bis 18) streifenförmige Frontelektroden (48) aufweist, auf denen jeweils streifenförmig eine Farbschicht (R, G, B) aufgebracht ist.

8. Beleuchtung nach Anspruch 7,
**dadurch gekennzeichnet, daß** quer zu den Frontelektroden (48) streifenförmige Rückelektroden (49) aufgebracht sind.

9. Beleuchtung nach Anspruches 7 oder 8
**dadurch gekennzeichnet, daß** die Front- und die Rückelektroden (48, 49) einzeln ansteuerbar sind.

10. Beleuchtung nach Anspruch 6,
**dadurch gekennzeichnet, daß** das Leuchtfeld (7 bis 11, 16 bis 18) diskrete Farbfelder (R, G, B) aufweist, die einzeln ansteuerbar sind.

11. Beleuchtung nach Anspruch 10,
**dadurch gekennzeichnet, daß** gleichfarbige Farbfelder (R, G, B) durch eine gemeinsame Leitung (51 bis 53) verbunden sind.

12. Beleuchtung nach Anspruch 10 oder 11 und 7,
**dadurch gekennzeichnet, daß** die Farbfelder (R, G, B) auf der flächenhaft ausgebildeten Frontelektrode (48) aufgebracht sind.

13. Beleuchtung nach einem der Ansprüche 10 bis 12 und 8,
**dadurch gekennzeichnet, daß** die Rückelektroden (49) entsprechend den Farbfeldern (R, G, B) diskret angeordnet sind.

14. Beleuchtung nach einem der Ansprüche 1 bis 13,
**dadurch gekennzeichnet, daß** der Flächenstrahler auf seiner dem Fahrzeuginnenraum zugewandten Seite mit wenigstens einer lichtdurchlässigen Schutzschicht (20) versehen ist, die vorzugsweise aus Kunststoff, Glas und dergleichen besteht.

15. Beleuchtung nach einem der Ansprüche 1 bis 14,
**dadurch gekennzeichnet, daß** der Flächenstrahler auf seiner vom Fahrzeuginnenraum abgewandten Seite mit wenigstens einer weiteren Schutzschicht (21) versehen ist, die vorzugsweise aus Kunststoff, Glas und dergleichen besteht.

16. Beleuchtung nach einem der Ansprüche 1 bis 15,
**dadurch gekennzeichnet, daß** das Leuchtfeld (7 bis 11, 16 bis 18) mit Wechselspannung versorgt wird.

17. Beleuchtung nach einem der Ansprüche 1 bis 16,
**dadurch gekennzeichnet, daß** der Konverter (24 bis 28, 54 bis 56) dimmbar und vorzugsweise durch einen Rechner (37) ansteuerbar ist.

18. Beleuchtung nach einem der Ansprüche 1 bis 17,
**dadurch gekennzeichnet, daß** das Leuchtfeld (7 bis 11, 16 bis 18) über eine Eingabeeinrichtung (34) einschaltbar ist.

19. Beleuchtung nach einem der Ansprüche 1 bis 18,
**dadurch gekennzeichnet, daß** bei mehreren Leuchtfeldern (7 bis 11, 16 bis 18) jedes Leuchtfeld einzeln einschaltbar ist.

20. Beleuchtung nach einem der Ansprüche 1 bis 19,
**dadurch gekennzeichnet, daß** das Leuchtfeld (7 bis 11, 16 bis 18) in Abhängigkeit von der Umgebungshelligkeit selbsttätig einschaltbar ist.

21. Beleuchtung nach einem der Ansprüche 1 bis 20,
**dadurch gekennzeichnet, daß** das Leuchtfeld (7 bis 9) am Dach des Fahrzeuginnenraumes befestigt ist.

22. Beleuchtung nach Anspruch 21,
**dadurch gekennzeichnet, daß** die Fläche des Daches des Fahrzeuginnenraumes durch wenigstens ein Leuchtfeld (7 bis 9) bedeckt ist.

23. Beleuchtung nach Anspruch 21 oder 22,
**dadurch gekennzeichnet, daß** am Dach des Fahrzeuginnenraumes mehrere Leuchtfelder (7 bis 9) vorgesehen sind, die vorzugsweise zumindest den größten Teil des Daches des Fahrzeuginnenraumes bedecken.

24. Beleuchtung nach einem der Ansprüche 1 bis 23,
**dadurch gekennzeichnet, daß** am Übergang vom Dach zu den Seitenfenstern (3 bis 6) des Fahrzeuges wenigstens ein längliches Leuchtfeld (10, 11) angeordnet ist, das sich vorzugsweise nahezu über die Länge des Daches im Übergangsbereich zu den Seitenfenstern (3 bis 6) erstreckt.

25. Beleuchtung nach einem der Ansprüche 1 bis 24,
**dadurch gekennzeichnet, daß** im Bereich zwischen einer Heckscheibe (2) und wenigstens dem einen benachbarten Seitenfenster (4, 6) des Fahrzeuges wenigstens ein weiteres Leuchtfeld (16, 17) vorgesehen ist, das vorzugsweise dreieckförmigen Umriß hat.

26. Beleuchtung nach einem der Ansprüche 1 bis 25,
**dadurch gekennzeichnet, daß** zumindest an einer Seite, vorzugsweise an beiden Seiten des Fahrzeuginnenraumes im Bereich zwischen hintereinander liegenden Seitenfenstern (3 und 4; 5 und 6) wenigstens ein weiteres Leuchtenfeld (18) angeordnet ist.

27. Beleuchtung nach einem der Ansprüche 1 bis 26,
**dadurch gekennzeichnet, daß** sämtliche Leuchtfelder (7 bis 11, 16 bis 18) gleichfarbiges Licht abstrahlen, wobei vorzugsweise zumindest einige der Leuchtfelder (7 bis 11, 16 bis 18) in einem anderen Farbton Licht abstrahlen als die anderen Leuchtfelder.

28. Beleuchtung nach einem der Ansprüche 1 bis 27,
**dadurch gekennzeichnet, daß** der Flächenstrahler durch eine elektrolumineszendierende Folie (19) oder durch eine lichtemittierende Polymerfolie gebildet ist.

## Claims

1. Interior lighting system for vehicles, preferably for motor vehicles, having at least one luminous zone (7 to 11, 16 to 18) which is connected to a voltage supply of the vehicle and is made up of at least one film-type light-emitting surface radiator, at least one DC/AC converter (23) being in the cable path from the voltage supply to the luminous zone (7 to 11, 16 to 18), **characterized in that** the luminous zone (7 to 11, 16 to 18) lies below an interior lining (22) of the vehicle interior and **in that** at least one converter (24 to 28, 54 to 56) is connected downstream of the DC/AC converter (23).

2. Lighting system according to Claim 1, **characterized in that** the interior lining (22) is composed of light-transmissive textile material.

3. Lighting system according to Claim 1, **characterized in that** the interior lining (22) is composed of light-transmissive foam material.

4. Lighting system according to one of Claims 1 to 3, **characterized in that** the brightness of the luminous zone (7 to 11, 16 to 18) can be adjusted, preferably by changing the supply voltage of the luminous zone (7 to 11, 16 to 18).

5. Lighting system according to one of Claims 1 to 4, **characterized in that** the hue of the luminous zone (7 to 11, 16 to 18) can be adjusted, preferably by changing the voltage frequency.

6. Lighting system, in particular according to one of Claims 1 to 5, **characterized in that** colour spots (R, G, B, 50) of different colours can be actuated in the luminous zone (7 to 11, 16 to 18).

7. Lighting system according to Claim 6, **characterized in that** the luminous zone (7 to 11, 16 to 18) has strip-type front electrodes (48), on which a colour layer (R, G, B) is applied in each case in strip form.

8. Lighting system according to Claim 7, **characterized in that** strip-type back electrodes (49) are applied transversely to the front electrodes (48).

9. Lighting system according to Claim 7 or 8, **characterized in that** the front and back electrodes (48, 49) can be actuated individually.

10. Lighting system according to Claim 6, **characterized in that** the luminous zone (7 to 11, 16 to 18) has discrete colour zones (R, G, B) which can be actuated individually.

11. Lighting system according to Claim 10, **characterized in that** colour zones (R, G, B) of the same colour are connected by a common line (51 to 53).

12. Lighting system according to Claim 10 or 11 and 7, **characterized in that** the colour zones (R, G, B) are applied on the areal front electrode (48).

13. Lighting system according to one of Claims 10 to 12 and 8, **characterized in that** the back electrodes (49) are arranged discretely according to the colour zones (R, G, B).

14. Lighting system according to one of Claims 1 to 13, **characterized in that** at least one light-transmissive protective layer (20) is provided on that side of the surface radiator which faces the vehicle interior, the protective layer preferably comprising plastic, glass and the like.

15. Lighting system according to one of Claims 1 to 14, **characterized in that** at least one further protective layer (21) is provided on that side of the surface radiator which faces away from the vehicle interior, the protective layer preferably comprising plastic, glass and the like.

16. Lighting system according to one of Claims 1 to 15, **characterized in that** the luminous zone (7 to 11, 16 to 18) is supplied with AC voltage.

17. Lighting system according to one of Claims 1 to 16, **characterized in that** the converter (24 to 28, 54 to 56) can be dimmed and can preferably be actuated by a computer (37).

18. Lighting system according to one of Claims 1 to 17, **characterized in that** the luminous zone (7 to 11, 16 to 18) can be switched on by means of an input device (34).

19. Lighting system according to one of Claims 1 to 18, **characterized in that**, in the case of a plurality of luminescent fields (7 to 11, 16 to 18), each luminous zonecan be switched on individually.

20. Lighting system according to one of Claims 1 to 19, **characterized in that** the luminous zone (7 to 11, 16 to 18) can be switched on automatically as a function of the ambient brightness.

21. Lighting system according to one of Claims 1 to 20, **characterized in that** the luminous zone (7 to 9) is attached on the roof of the vehicle interior.

22. Lighting system according to Claim 21, **characterized in that** the surface of the roof of the vehicle interior is covered by at least one luminous zone (7 to 9).

23. Lighting system according to Claim 21 or 22, **characterized in that** a plurality of luminescent fields (7 to 9) are provided on the roof of the vehicle interior, which preferably cover at least the largest portion of the roof of the vehicle interior.

24. Lighting system according to one of Claims 1 to 23, **characterized in that** at least one elongate luminous zone (10, 11) is arranged at the transition from the roof to the side windows (3 to 6) of the vehicle, preferably almost extending over the length of the roof in the transition area to the side windows (3 to 6).

25. Lighting system according to one of Claims 1 to 24, **characterized in that** at least one further luminous zone (16, 17) preferably having a triangular outline is provided in the area between a rear window (2) and at least the one adjacent side window (4, 6) of the vehicle.

26. Lighting system according to one of Claims 1 to 25, **characterized in that** at least one further luminous zone (18) is arranged at least on one side, preferably on both sides, of the vehicle interior in the area between side windows (3 and 4; 5 and 6) which are located one behind another.

27. Lighting system according to one of Claims 1 to 26, **characterized in that** all the luminescent fields (7 to 11, 16 to 18) emit light of the same colour, preferably with at least some of the luminescent fields (7 to 11, 16 to 18) emitting light of a different hue than the other luminescent fields.

28. Lighting system according to one of Claims 1 to 27, **characterized in that** the surface radiator is in the form of an electroluminescent film (19) or in the form of a light-emitting polymer film.

## Revendications

1. Éclairage intérieur pour véhicules, de préférence pour véhicules comportant au moins un panneau lumineux (7 à 11, 16 à 18), qui est relié à une alimentation en tension du véhicule et qui est formé par un projecteur rayonnant une lumière, en forme de feuille, dans lequel au moins un convertisseur CC/CA (23) se trouve dans une trajectoire allant de l'alimentation en tension au panneau lumineux (7 à 11, 16 à 18),
**caractérisé en ce que** le panneau lumineux (7 à 11, 16 à 18) se trouve sous l'habillage intérieur (22) de l'intérieur du véhicule, et **en ce qu'**au moins un convertisseur (24 à 28, 54 à 56) est placé en aval du convertisseur CC/CA (23).

2. Éclairage selon la revendication 1, **caractérisé en ce que** l'habillage intérieur (22) est constitué de matériau textile translucide.

3. Éclairage selon la revendication 1, **caractérisé en ce que** l'habillage intérieur (22) est constitué de mousse expansée translucide.

4. Éclairage selon l'une des revendications 1 à 3, **caractérisé en ce que** le panneau lumineux (7 à 11, 16 à 18) est réglable en luminosité, de préférence de en faisant varier la tension d'alimentation du panneau lumineux (7 à 11, 16 à 18).

5. Éclairage selon l'une des revendications 1 à 4, **caractérisé en ce que** la couleur du panneau lumineux (7 à 11, 16 à 18) peut être modifiée, de préférence en faisant varier la fréquence de la tension.

6. Éclairage en particulier selon l'une des revendications 1 à 5, **caractérisé en ce que** des points de couleurs différentes (R, G, B 50) peuvent être commandés dans le panneau lumineux (7 à 11, 16 à 18).

7. Éclairage selon la revendication 6, **caractérisé en ce que** le panneau lumineux (7 à 11, 16 à 18) présente des électrodes avant en forme de bandes (48), sur lesquelles une couche colorée (R, G, B) est disposée respectivement en forme de bande.

8. Éclairage selon la revendication 7, **caractérisé en ce que** des électrodes arrière en forme de bandes (49) sont disposées transversalement aux électrodes avant (48).

9. Éclairage selon la revendication 7 ou 8, **caractérisé en ce que** les électrodes avant et arrière (48, 49) peuvent être commandées individuellement.

10. Éclairage selon la revendication 6, **caractérisé en ce que** le panneau lumineux (7 à 11, 16 à 18) présente des champs colorés discrets (R, G, B), et qui peuvent être commandés individuellement.

11. Éclairage selon la revendication 10, **caractérisé en ce que** les champs colorés de même couleur (R, G, B) sont reliés par un fil commun (51 à 53).

12. Éclairage selon la revendication 10 ou 11 et 7, **caractérisé en ce que** les champs colorés (R, G, B) sont disposés sur les électrodes avant planes (48).

13. Éclairage selon l'une des revendications 10 à 12 et 8, **caractérisé en ce que** les électrodes arrière(49) sont disposées de façon discrète correspondant aux champs colorés (R, G, B).

14. Éclairage selon l'une des revendications 1 à 13, **caractérisé en ce que** le projecteur est muni sur son côté tourné vers l'intérieur du véhicule d'au moins une couche de protection translucide (20), qui est constituée de préférence en plastique, en verre ou analogue.

15. Éclairage selon l'une des revendications 1 à 14, **caractérisé en ce que** le projecteur est muni sur son côté éloigné de l'intérieur du véhicule d'au moins une autre couche de protection (21), qui est constituée de préférence de plastique, de verre ou analogue.

16. Éclairage selon l'une des revendications 1 à 15, **caractérisé en ce que** le panneau lumineux (7 à 11, 16 à 18) est alimenté par une tension alternative.

17. Éclairage selon l'une des revendications 1 à 16, **caractérisé en ce que** le convertisseur (24 à 28, 54 à 56) peut être commandé par un gradateur et de préférence par un calculateur (37).

18. Éclairage selon l'une des revendications 1 à 17, **caractérisé en ce que** le panneau lumineux (7 à 11, 16 à 18) peut être mis en marche par l'intermédiaire d'un dispositif de saisie (34).

19. Éclairage selon l'une des revendications 1 à 18, **caractérisé en ce que**, dans le cas de plusieurs champs lumineux (7 à 11, 16 à 18), chaque panneau lumineux peut être mis en service individuellement.

20. Éclairage selon l'une des revendications 1 à 19, **caractérisé en ce que** le panneau lumineux (7 à 11, 16 à 18) peut être mis en service automatiquement selon la luminosité ambiante.

21. Éclairage selon l'une des revendications 1 à 20, **caractérisé en ce que** le panneau lumineux (7 à 9) est fixé au plafond de l'intérieur du véhicule.

22. Éclairage selon la revendication 21, **caractérisé en ce que** la surface du plafond de l'intérieur du véhicule est recouverte par au moins un panneau lumineux (7 à 9).

23. Éclairage selon la revendication 21 ou 22, **caractérisé en ce que**, sur le plafond de l'intérieur du véhicule, plusieurs champs lumineux (7 à 9) sont prévus, qui recouvrent de préférence au moins la plus grande partie du plafond de l'intérieur du véhicule.

24. Éclairage selon l'une des revendications 1 à 23, **caractérisé en ce que**, sur la transition du plafond aux fenêtres latérales (3 à 6) du véhicule, est disposé au moins un panneau lumineux allongé (10, 11), qui s'étend de préférence approximativement sur la longueur du plafond dans la zone de transition vers les fenêtres latérales (3 à 6).

25. Éclairage selon l'une des revendications 1 à 24, **caractérisé en ce que**, dans la zone entre la lunette arrière (2) et au moins une fenêtre latérale adjacente (4, 6) du véhicule, est prévu au moins un autre panneau lumineux (16, 17), qui est de préférence de forme triangulaire.

26. Éclairage selon l'une des revendications 1 à 25, **caractérisé en ce qu'**au moins sur un côté, de préférence sur les deux côtés de l'intérieur du véhicule, dans la zone entre les fenêtres latérales se trouvant à l'arrière (3 et 4; 5 et 6), est disposé au moins un autre panneau lumineux (18).

27. Éclairage selon l'une des revendications 1 à 26, **caractérisé en ce que** tous les champs lumineux (7 à 11, 16 à 18) émettent une lumière de même couleur, dans lequel de préférence au moins certains des champs lumineux (7 à 11, 16 à 18) émettent une lumière dans une autre teinte que les autres champs lumineux.

28. Éclairage selon l'une des revendications 1 à 27, **caractérisé en ce que** le projecteur est formé par une feuille électroluminescente (19) ou par une feuille en polymère émettant une lumière.
